# EUROPÄISCHE PATENTSCHRIFT

(11) **EP 3 321 555 B1**
(45) Veröffentlichungstag und Bekanntmachung des Hinweises auf die Patenterteilung: **06.11.2019**
(21) Anmeldenummer: 16198582.5
(22) Anmeldetag: 14.11.2016
(51) Int. Cl.: F16M 11/04, B05B 13/02, F16M 11/38

(54) **VORRICHTUNG ZUM LAGERN UND TRANSPORTIEREN VON VERKLEIDUNGSBAUTEILEN VON FAHRZEUGEN, INSBESONDERE VON STOSSFÄNGERN**
DEVICE FOR STORING AND TRANSPORTING CLADDING COMPONENTS OF VEHICLES, IN PARTICULAR BUMPERS
DISPOSITIF DE STOCKAGE ET DE TRANSPORT DE COMPOSANTS DE REVÊTEMENT DE VÉHICULES, EN PARTICULIER DE PARE-CHOCS

(43) Veröffentlichungstag der Anmeldung: 16.05.2018
(73) Patentinhaber: SMP Deutschland GmbH, 79268 Bötzingen (DE)
(72) Erfinder: Allendorf, Ralf, 79268 Bötzingen (DE)
(74) Vertreter: Westphal, Mussgnug & Partner Patentanwälte mbB

(56) Entgegenhaltungen:
- DE-U1-202011 002 936
- US-A- 1 899 935
- US-A- 4 763 865
- US-B1- 6 409 128

## Beschreibung

Die vorliegende Erfindung betrifft eine Vorrichtung zum Lagern und Transportieren von flächigen Verkleidungsbauteilen, insbesondere von Stoßfängern.

Die DE 20 2011 002 936 U1 offenbart eine Vorrichtung zum Lagern und Transportieren von Kunststoffbauteilen. Die US 6 409 128 B1 und die US 4 763 865 A zeigen Vorrichtungen, auf denen Gegenstände des täglichen Bedarfs abgelegt werden können. Die US 1 899 935 A offenbart einen Ständer, mit dem Teppiche ausgestellt werden können.

Um den Fahrzeugen ein individuelles und differenzierendes Design zu geben, weist nahezu jeder Fahrzeugtyp speziell geformte Verkleidungsbauteile mit eigenen Abmessungen auf. Während und nach der Herstellung der Verkleidungsbauteile müssen diese gelagert und transportiert werden, wozu spezielle Vorrichtungen benötigt werden. Diese Vorrichtungen sind so ausgeführt, dass sie sowohl den Transport als auch die Lagerung der Verkleidungsbauteile ermöglichen.

Aufgrund der unterschiedlichen Formen und Abmessungen der Verkleidungsbauteile eines Fahrzeugtyps muss für jedes zu transportierende und zu lagernde Verkleidungsbauteil eine hierauf speziell zugeschnittene Vorrichtung angefertigt und vorgehalten werden. Diese Vorrichtungen müssen aber nicht nur auf die jeweiligen Verkleidungsbauteile angepasst werden, sondern auch auf den jeweiligen Fertigungszustand. Insbesondere um Beschädigungen zu vermeiden, müssen Verkleidungsbauteile, die beispielsweise im Spritzgussverfahren hergestellt werden, nach dem Verlassen der Spritzgussform und vor dem Lackieren anders gelagert und transportiert werden als nach dem Lackieren. Folglich kann es notwendig sein, eine Vorrichtung, die auf eine gegebene Form und eine gegebene Abmessung eines Verkleidungsbauteils angepasst ist, noch zusätzlich auf den Fertigungszustand anzupassen.

Aufgrund dieser Randbedingungen ist es für ein Unternehmen, welches Verkleidungsbauteile für verschiedene Fahrzeugtypen fertigt, daher notwendig, eine Vielzahl von Vorrichtungen zum Lagern und Transportieren von Verkleidungsbauteilen vorzuhalten, was hohe Investitionen und einen hohen logistischen Aufwand erfordert. Aufgabe einer Ausführungsform der vorliegenden Erfindung ist es daher, eine Vorrichtung zum Lagern und Transportieren von Verkleidungsbauteilen von Fahrzeugen und insbesondere von Stoßfängern anzugeben, welche die notwendigen Investitionen und den logistischen Aufwand verringert.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft eine Vorrichtung zum Lagern und Transportieren von Verkleidungsbauteilen von Fahrzeugen, insbesondere von Stoßfängern, umfassend einen ersten Aufnahmeabschnitt und einen zweiten Aufnahmeabschnitt, auf welche das Verkleidungsbauteil zum Lagern und Transportieren auflegbar ist, eine Tragstruktur, an welcher der erste Aufnahmeabschnitt und der zweite Aufnahmeabschnitt in einem Abstand zueinander befestigt sind, wobei die Tragstruktur einen ersten Tragarm umfasst, und eine mit der Tragstruktur zusammenwirkende Verstelleinrichtung, mit welcher der Abstand zwischen dem ersten Aufnahmeabschnitt und dem zweiten Aufnahmeabschnitt veränderbar ist.

Um die Verkleidungsbauteile so weit wie möglich zu schonen, ist man bestrebt, diese zum Lagern und Transportieren an wenigen Stellen abzulegen. Insofern genügt es, bei einer entsprechenden Ausgestaltung nur zwei Aufnahmeabschnitte vorzusehen, auf welchen die Verkleidungsbauteile abgelegt werden können. Die Tragstruktur, an welcher die Verkleidungsbauteile befestigt sind, kann beispielsweise eine Balkenkonstruktion sein. Vorschlagsgemäß sind dabei der erste und der zweite Aufnahmeabschnitt in einem Abstand zueinander an der Tragstruktur befestigt, wobei der Abstand mittels der Verstelleinrichtung veränderbar ist. Hierdurch können unterschiedliche Verkleidungsbauteile mit derselben Vorrichtung gelagert und transportiert werden, ohne dass für jedes Verkleidungsbauteil eine gesonderte Vorrichtung bereitgestellt werden muss. Es ist lediglich notwendig, den Abstand zwischen den beiden Aufnahmeabschnitten auf das zu lagernde Verkleidungsbauteil anzupassen, was mit wenigen Handgriffen erledigt werden kann. Zudem können auch unterschiedliche Fertigungszustände desselben Verkleidungsbauteils berücksichtigt werden. Beispielsweise kann es sich anbieten, ein Bauteil, welches gerade aus einem Spritzgusswerkzeug entnommen worden ist, an anderen Stellen auf die Aufnahmeabschnitte abzulegen als dann, wenn das Verkleidungsbauteil gerade lackiert worden ist. Auch hierauf kann flexibel mit der vorschlagsgemäßen Vorrichtung reagiert werden, ebenfalls durch ein entsprechendes Verändern des Abstands zwischen den beiden Aufnahmeabschnitten.

Folglich ist es möglich, mit nur einer vorschlagsgemäßen Vorrichtung Verkleidungsbauteile mit unterschiedlichen Abmessungen und Formen und unter Berücksichtigung des Fertigungszustands zu lagern und zu transportieren. Die Investitionskosten und der logistische Aufwand werden verringert.

Erfindungsgemäß umfasst die Verstelleinrichtung einen um eine Hebelachse drehbaren Hebel mit einem ersten Hebelabschnitt und eine erste Koppelstange, wobei die erste Koppelstange mit dem ersten Tragarm und im Bereich des ersten Hebelarms mit dem Hebel verbunden ist. In dieser Ausführungsform kann einer der Tragarme durch bloßes Drehen des Hebels gedreht werden. Der Hebel kann dabei so dimensioniert werden, dass nur geringe Kräfte zum Verändern des Abstands der beiden Aufnahmeabschnitte zueinander erforderlich sind. Folglich können auch längere, stärker dimensionierte und folglich schwerere Tragarme einfach gedreht werden.

Bei einer weiteren Ausführungsform kann vorgesehen sein, dass die Tragstruktur einen zweiten Tragarm umfasst, wobei der erste Aufnahmeabschnitt am ersten Tragarm und der zweite Aufnahmeabschnitt am zweiten Tragarm befestigt ist und der erste Tragarm und/oder der zweite Tragarm mit der Verstelleinrichtung bewegbar sind, um den Abstand zwischen dem ersten Aufnahmeabschnitt und dem zweiten Aufnahmeabschnitt zu verändern. Die Verwendung von Tragarmen ermöglicht die Aufnahme von hohen Kräften, so dass auch schwerere Verkleidungsbauteile problemlos auf der vorschlagsgemäßen Vorrichtung abgelegt werden können. Zudem ist es konstruktiv relativ einfach, die Tragarme, an denen die Aufnahmeabschnitte befestigt sind, so auszugestalten, dass sie mit der Verstelleinrichtung bewegbar sind. Beispielsweise können die Tragarme teleskopierbar sein, so dass sie in ihrer Länge einfach verstellbar sind, wodurch auch der Abstand zwischen den Aufnahmeabschnitten verändert werden kann.

Gemäß einer weitergebildeten Ausführungsform sind der erste Tragarm und/oder der zweite Tragarm jeweils um eine Drehachse drehbar an der Tragstruktur gelagert und werden zum Verändern des Abstands mittels der Verstelleinrichtung um die Drehachse gedreht. Wie zuvor erörtert, kann der Abstand zwischen den beiden Aufnahmeabschnitten dadurch verstellt werden, dass die Tragarme teleskopierbar sind. Hierzu ist aber ein relativ hoher konstruktiver Aufwand notwendig. Wenn jedoch die Tragarme drehbar an der Tragstruktur gelagert sind, kann der Abstand zwischen den beiden Aufnahmeabschnitten durch bloßes Drehen zumindest eines der Tragarme relativ zum anderen Tragarm verstellt werden, so dass die Tragarme nur drehbar gelagert werden müssen. Weitere konstruktive Änderungen an den Tragarmen sind nicht notwendig, so dass die vorschlagsgemäße Vorrichtung gemäß dieser Ausführungsform kostengünstig bereitgestellt werden kann.

Eine weitergebildete Ausführungsform gibt vor, dass der Hebel einen zweiten Hebelabschnitt und eine zweite Koppelstange umfasst, wobei die zweite Koppelstange mit dem zweiten Tragarm und im Bereich des zweiten Hebelabschnitts mit dem Hebel verbunden ist. In dieser Ausführungsform können die beiden Tragarme synchron gegeneinander verdreht werden. In dieser Ausführungsform ist es möglich, die Tragarme synchronisiert zueinander zu drehen und die Aufnahmeabschnitte beim Drehen der Tragarme in einer in etwa horizontal verlaufenden Ebene zu halten. Um ein Verrutschen des Verkleidungsbauteils beim Transport zu verhindern und um das Verkleidungsbauteil möglichst gleichmäßig zu belasten, ist eine möglichst horizontale Lagerung vorteilhaft oder sogar notwendig. Die Aufnahmeabschnitte können beim Verändern des Abstands auf konstruktiv einfache Weise in der horizontal verlaufenden Ebene gehalten werden.

Es bietet sich an, dass die Verstelleinrichtung eine Feststelleinrichtung umfasst, mit welcher der Abstand zwischen dem ersten Aufnahmeabschnitt und dem zweiten Aufnahmeabschnitt festlegbar ist. Mit der Verstelleinrichtung kann ein einmal gewählter Abstand festgehalten werden, so dass sich der Abstand beim Lagern oder Transportieren nicht unkontrolliert ändert. Die Feststelleinrichtung kann dabei mit einem Schlüssel oder anderen Schutzeinrichtungen ausgerüstet werden, so dass ein unbefugtes Verstellen nicht möglich ist.

In einer weiteren Ausführungsform umfasst die Verstelleinrichtung ein Griffstück zum Betätigen des Hebels, wobei das Griffstück und/oder der Hebel zum Festlegen des Abstands mit der Feststelleinrichtung zusammenwirken. Hierdurch wird die Verstellung vereinfacht. Zudem kann das Griffstück gleichzeitig auch dazu verwendet zu werden, den gewählten Abstand festzulegen und zu fixieren. Insofern kann die Feststelleinrichtung mit wenigen zusätzlichen Bauteilen realisiert werden.

Bei einer weitergebildeten Ausführungsform weist die Tragstruktur einen Eingriffsabschnitt zum Lagern und Transportieren der Vorrichtung mit einer Transporteinrichtung auf. Transporteinrichtungen können beispielsweise ein Gabelstabler oder ein Förderband sein, die mit einem Gabelstabler oder ähnlichen Vorrichtungen be- und entladen werden können. Der Eingriffsabschnitt kann im einfachsten Fall von Auslegern der Tragstruktur gebildet werden, die beispielsweise mit der Gabel des Gabelstablers zusammenwirken. Dabei kann es zweckmäßig sein, einen Abstandhalter vorzusehen, so dass die Ausleger nicht auf dem Boden auflegen. Die Gabel kann dann problemlos unter die Ausleger gebracht und die Vorrichtung angehoben werden. Wirkt der Eingriffsabschnitt mit einem Förderband zusammen, sorgt der Eingriffsabschnitt dafür, dass die Vorrichtung nicht vom Förderband fallen kann. Selbiges gilt auch für eine Rollenbahn, bei welcher der Eingriffsabschnitt mit einer seitlichen Begrenzungsleiste zusammenwirken kann. Die Vorrichtung kann folglich in ein voll automatisiertes Lager integriert werden.

Gemäß einer weiteren Ausführungsform umfassen der erste Aufnahmeabschnitt und der zweite Aufnahmeabschnitt elastische Schaumstoffauflagen. Dadurch, dass die elastischen Schaumstoffauflagen bei Belastung nachgeben, werden einerseits die Verkleidungsbauteile geschont und andererseits eine Anpassung der Aufnahmeabschnitte an die Abmessungen und Formen der Verkleidungsbauteile erreicht. Die Schaumstoffauflagen können beispielsweise als Schaumstoffummantelungen ausgeführt sein. Auch hierdurch wird die Flexibilität der Vorrichtung erhöht, da keine Anpassung der Aufnahmeabschnitte an die Formen und Abmessungen der Verkleidungsbauteile vorgenommen werden muss. Folglich kann sie problemlos für eine Vielzahl unterschiedlicher Verkleidungsbauteile verwendet werden.

Nach Maßgabe einer fortgebildeten Ausführungsform werden die Schaumstoffauflagen von im Wesentlichen zylinderförmigen Schaumstoffrollen gebildet, welche ein freies, von den Tragarmen wegzeigendes freies Ende aufweisen. Hierdurch wird die Zugänglichkeit zu den Aufnahmeabschnitten erhöht, da die Aufnahmeabschnitte am freien Ende hin nicht von Hindernissen und insbesondere von der Tragstruktur selbst versperrt werden.

In einer weitergebildeten Ausführungsform sind die Schaumstoffrollen drehbar an den Tragarmen montiert. Aufgrund der Drehbarkeit der Schaumstoffrollen werden die Verkleidungsbauteile geschont, da ein Gleiten der Verkleidungsbauteile entlang der Aufnahmeabschnitte weitgehend vermieden wird. Kratzer werden so weitgehend vermieden.

Bei einer weiteren Ausführungsform bilden die Tragarme ein hinteres Ende der Tragstruktur. Insbesondere dann, wenn die Tragarme das hintere Ende der Tragstruktur bilden und die Schaumstoffrollen das von den Tragarmen wegzeigende freie Ende aufweisen, wird die Zugänglichkeit zu den Aufnahmeabschnitten besonders erhöht, da die Tragstruktur so ausgestaltet werden kann, dass keine Streben vorhanden sind, welche den Zugang zu den Aufnahmeabschnitten einschränken.

Nach einer weitergebildeten Ausführungsform weisen der erste Aufnahmeabschnitt und der zweite Aufnahmeabschnitt jeweils einen Anschlag auf. Der Anschlag, der auch aus Schaumstoff bestehen kann oder eine Schaumstoffummantelung aufweist, verhindert ein Verrutschen des Verkleidungsbauteils über das freie Ende des Aufnahmeabschnitts. Weiterhin kann der Anschlag zum Positionieren des Verkleidungsbauteils auf den Aufnahmeabschnitten verwendet werden.

Gemäß einer fortgebildeten Ausführungsform weist die Tragstruktur eine erste Drehlagerstange und/oder eine zweite Drehlagerstange auf, wobei eine erste Versteifungsstrebe zwischen der ersten Drehlagerstange und dem ersten Tragarm und/oder eine zweite Verbindungsstrebe zwischen der zweiten Drehlagerstange und dem zweiten Tragarm verlaufen. Die Drehlagerstangen können auch hülsenförmig ausgeführt sein. Die Drehlagerstangen werden dabei an zwei beabstandet zueinander angeordneten Lagerstellen an der Tragstruktur drehbar gelagert. Der Verlauf der Versteifungsstreben zwischen den Tragarmen und den Drehlagerstangen hat den Vorteil, dass die Versteifungsstreben genau dieselben Bewegungen ausführen wie die Tragarme. Die Versteifungsstreben können so angeordnet und dimensioniert werden, dass auch schwerere Verkleidungsbauteile problemlos von der Vorrichtung aufgenommen und mit ihr gelagert und transportiert werden können, ohne dass die Zugänglichkeit zu den Aufnahmeabschnitten vermindert wird.

Nach Maßgabe einer weiteren Ausführungsform sind zumindest ein weiterer erster Aufnahmeabschnitt und zumindest ein weiterer zweiter Aufnahmeabschnitt an der Tragstruktur in einem weiteren Abstand zueinander befestigt, wobei der weitere Abstand mit der Verstelleinrichtung veränderbar ist. In dieser Ausführungsform ist es möglich, zumindest ein weiteres Verkleidungsbauteil mit der vorschlagsgemäßen Vorrichtung zu Lagern und Transportieren. Der vorhandene Raum wird effektiv ausgenutzt und die Anzahl der benötigten Vorrichtungen reduziert, so dass die Investitionskosten verringert werden. Die Verstelleinrichtung ist so ausgeführt, dass sowohl der Abstand zwischen dem ersten und dem zweiten Aufnahmeabschnitt als auch der weitere Abstand zwischen dem weiteren ersten und dem weiteren zweiten Aufnahmeabschnitt mit einem Verstellvorgang gleichzeitig verändert werden. Insofern kann in dieser Ausführungsform gewährleistet werden, dass sowohl der Abstand als auch der weitere Abstand immer auf dieselbe Weise geändert werden. Es wird verhindert, dass nur einer der beiden Abstände verändert wird. Beschädigungen der Verkleidungsbauteile, die daraus resultieren können, dass versehentlich nur einer der Abstände verändert oder die Abstände ungleichmäßig verändert werden, werden in dieser Ausführungsform ausgeschlossen.

Es kann aber gewollt sein, Verkleidungsbauteile mit unterschiedlichen Formen und Abmessungen mit derselben Vorrichtung zu lagern und zu transportieren, beispielsweise aus logistischen Gründen. In diesem Fall kann die Verstelleinrichtung so ausgeführt werden, dass der Abstand und der weitere Abstand unabhängig voneinander verstellt werden können, beispielsweise dadurch, dass mehrere, getrennt voneinander betätigbare Hebel vorgesehen werden. Alternativ ist es möglich, die Verstelleinrichtung so auszuführen, dass der weitere Abstand in einem bestimmten Verhältnis zum Abstand verändert wird.

Eine Ausgestaltung der Erfindung betrifft die Verwendung einer Vorrichtung nach einer der zuvor beschriebenen Ausführungsformen zum Lagern und Transportieren von Verkleidungsbauteilen von Fahrzeugen. Die technischen Effekte und Vorteile, die sich mit der Verwendung erreichen lassen, entsprechen denjenigen, die für die vorschlagsgemäße Vorrichtung zum Lagern und Transportieren von Verkleidungsbauteilen von Fahrzeugen erörtert worden sind. Zusammenfassend sei darauf hingewiesen, dass es möglich ist, mit nur einer vorschlagsgemäßen Vorrichtung Verkleidungsbauteile mit unterschiedlichen Abmessungen und Formen und unter Berücksichtigung des Fertigungszustands zu lagern und zu transportieren. Die Investitionskosten und der logistische Aufwand werden verringert.

Beispielhafte Ausführungsformen der Erfindung werden im Folgenden unter Bezugnahme auf die beigefügten Zeichnungen näher erläutert. Es zeigen
- Figur 1a): eine prinzipielle Vorderansicht auf ein erstes Ausführungsbeispiel einer erfindungsgemäßen Vorrichtung zum Lagern und Transportieren von Verkleidungsbauteilen von Fahrzeugen in einer ersten Stellung,
- Figur 1b): die in Figur 1a) dargestellte Vorrichtung in einer zweiten Stellung,
- Figur 2a): eine perspektivische Darstellung eines zweiten Ausführungsbeispiels der erfindungsgemäßen Vorrichtung zum Lagern und Transportieren von Verkleidungsbauteilen von Fahrzeugen,
- Figur 2b): eine Vorderansicht des in Figur 2a) dargestellten Ausführungsbeispiels der erfindungsgemäßen Vorrichtung,
- Figur 2c): eine vergrößerte Darstellung des in Figur 2a) gekennzeichneten Details X, und
- Figur 2d): eine vergrößerte Darstellung des in Figur 2b) gekennzeichneten Details Y.

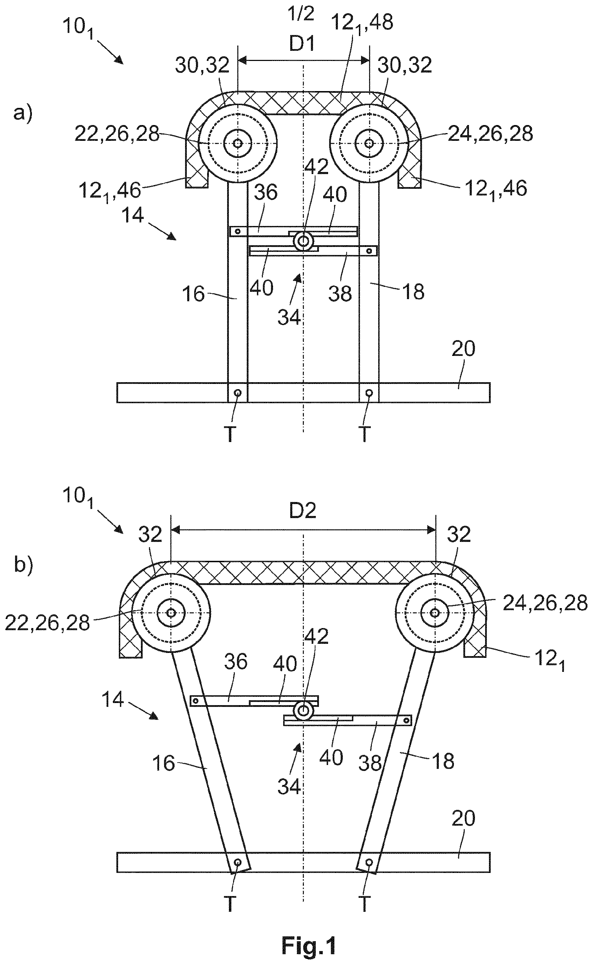

In den Figuren 1a) und 1b) ist ein erstes Ausführungsbeispiel einer Vorrichtung 10₁ zum Lagern und Transportieren von Verkleidungsbauteilen 12 von Fahrzeugen, insbesondere von Stoßfängern, jeweils anhand einer prinzipiellen Vorderansicht gezeigt. Die Vorrichtung 10₁ weist eine Tragstruktur 14 auf, welche im dargestellten Ausführungsbeispiel einen ersten Tragarm 16 und einen zweiten Tragarm 18 umfasst, welche jeweils um eine Drehachse T drehbar an einem Tragprofil 20 befestigt sind. Am ersten Tragarm 16 ist ein erster Aufnahmeabschnitt 22 und am zweiten Tragarm 18 ist ein zweiter Aufnahmeabschnitt 24 befestigt, die jeweils elastische Schaumstoffauflagen 26 aufweisen. Im dargestellten Ausführungsbeispiel umfassen die Schaumstoffauflagen 26 im Wesentlichen zylinderförmige Schaumstoffrollen 28, die drehbar an den Tragarmen 16, 18 befestigt sind. Die Aufnahmeabschnitte 22, 24 bzw. die Schaumstoffrollen 28 weisen jeweils ein von den Tragarmen 16, 18 wegweisendes freies Ende 30 auf, wo jeweils ein Anschlag 32 angeordnet ist. Der Anschlag 32 kann scheibenförmig ausgeführt und konzentrisch zu den Schaumstoffrollen 28 angeordnet sein und einen größeren Durchmesser als die Schaumstoffrollen 28 aufweisen.

Wie aus Figur 1a) ersichtlich ist, befindet sich die Vorrichtung 10₁ in einer ersten Stellung, in welcher der erste Aufnahmeabschnitt 22 und der zweite Aufnahmeabschnitt 24 in einem ersten Abstand D1 angeordnet sind. Die Vorrichtung 10₁ weist weiterhin eine Verstelleinrichtung 34 auf, mit welcher der Abstand D zwischen dem ersten Aufnahmeabschnitt 22 und dem zweiten Aufnahmeabschnitt 24 verändert werden kann. Im ersten Ausführungsbeispiel umfasst die Verstelleinrichtung 34 hierzu eine am ersten Tragarm 16 drehbar befestigte erste Koppelstange 36 und eine am zweiten Tragarm 18 befestigte zweite Koppelstange 38, die jeweils einen Zahnstangenabschnitt 40 umfassen, die mit einem Zahnrad 42 zusammenwirken. Durch Drehen des Zahnrads 42 lässt sich der erste Abstand D1 verändern, so dass sich die Vorrichtung 10₁ in eine zweite Stellung (siehe Figur 1b)) überführen lässt, in welcher der erste Aufnahmeabschnitt 22 und der zweite Aufnahmeabschnitt 24 einen zweiten Abstand D2 zueinander aufweisen.

In Figur 1a) ist ein erstes Verkleidungsbauteil 12₁ eines Fahrzeugs, beispielsweise ein Stoßfänger, auf dem ersten Aufnahmeabschnitt 22 und dem zweiten Aufnahmeabschnitt 24 abgelegt. Das erste Verkleidungsbauteil 12₁ ist in Figur 1a) stark vereinfacht dargestellt, allerdings weisen insbesondere die Stoßfänger in der Draufsicht in etwa eine U-Form mit zwei Seitenschenkeln 46 und einem die Seitenschenkel 46 verbindenden Verbindungsschenkel 48 auf. Der Abstand D zwischen den Aufnahmeabschnitten 22, 24 wird so gewählt, dass das Verkleidungsbauteil 12 in etwa an den Übergängen des Verbindungsschenkels 48 in die Seitenschenkel 46 auf den Aufnahmeabschnitten 22, 24 aufliegt. Hierdurch wird sichergestellt, dass sich das Verkleidungsbauteil 12₁ insbesondere beim Transport nicht oder nur in sehr geringem Umfang relativ zu den Aufnahmeabschnitten 22, 24 bewegen kann, wodurch Beschädigungen vermieden werden.

In Figur 1b) ist ein zweites Verkleidungsbauteil 12₂ ebenfalls stark vereinfacht dargestellt, welches im Wesentlichen denselben Aufbau aufweist die das erste Verkleidungsbauteil 12₁, allerdings breiter als das erste Verkleidungsbauteil 12₁ ist. Entsprechend wird der Abstand D2 zwischen den beiden Aufnahmeabschnitten 22, 24 vergrößert, so dass auch das zweite Verkleidungsbauteil 12 an den Übergängen des Verbindungsschenkels 48 zu den Seitenschenkel 46 auf den Aufnahmeabschnitten 22, 24 aufliegt.

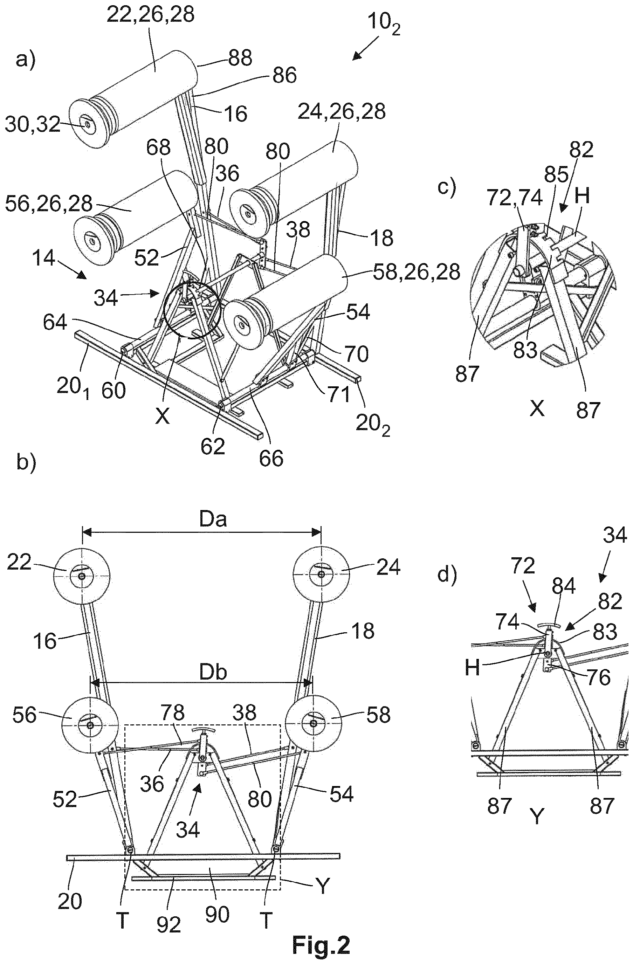

In Figur 2a) ist ein zweites Ausführungsbeispiel der erfindungsgemäßen Vorrichtung 10₂ zum Lagern und Transportieren von Verkleidungsbauteilen 12 von Fahrzeugen anhand einer perspektivischen Darstellung und in Figur 2b) anhand einer Vorderansicht gezeigt. Der prinzipielle Aufbau ist derselbe wie der des ersten Ausführungsbeispiels, allerdings ist weist die Tragstruktur 14 einen weiteren ersten Tragarm 52 und einen weiteren zweiten Tragarm 54 auf, an denen ein weiterer erster Aufnahmeabschnitt 56 bzw. ein weiterer zweiter Aufnahmeabschnitt 58 befestigt ist. Alternativ können der weitere erste Aufnahmeabschnitt 56 und der weitere zweite Aufnahmeabschnitt 58 auch am ersten Tragarm 16 bzw. am zweiten Tragarm 18 befestigt werden.

Zudem umfasst die Tragstruktur 14 ein erstes Tragprofil 20₁ und ein zweites Tragprofil 20₂, zwischen denen eine erste Drehlagerstange 60 und eine zweite Drehlagerstange 62 verlaufen, mit denen der erste Tragarm 16 und der zweite Tragarm 18 drehbar gelagert sind. Zudem weist die Tragstruktur 14 eine erste Drehlagerhülse 64 und eine zweite Drehlagerhülse 66 auf, mit denen der weitere erste Tragarm 52 und der weitere zweite Tragarm 54 drehbar gelagert sind. Die erste Drehlagerhülse 64 und die zweite Drehlagerhülse 66 umschließen dabei teilweise die erste Drehlagerstange 60 bzw. die zweite Drehlagerstange 62, so dass die Drehlagerstangen 60, 62 zur Lagerung der Drehlagerhülsen 64, 66 dienen.

Darüber hinaus weist Tragstruktur 14 eine erste Versteifungsstrebe 68, die zwischen der ersten Drehlagerstange 60 und dem ersten Tragarm 16 verläuft, und eine zweite Versteifungsstrebe 70 auf, die zwischen der zweiten Drehlagerstange 62 und dem zweiten Tragarm 18 verläuft. Entsprechend weist die Tragstruktur 14 eine weitere erste Versteifungsstrebe 69 (in den Figuren nicht sichtbar), die zwischen der ersten Drehlagerhülse 64 und dem weiteren ersten Tragarm 52 verläuft, und eine weitere zweite Versteifungsstrebe 71 auf, die zwischen der zweiten Drehlagerhülse 66 und dem weiteren zweiten Tragarm 54 verläuft. Mit den Versteifungsstreben 68 bis 71 werden die wirkenden Drehmomente besser in die Drehlagerstangen 60, 62 eingeleitet.

Wie insbesondere aus Figur 2d) hervorgeht, welche das in Figur 2b) gekennzeichnete Detail Y isoliert zeigt, umfasst die Verstelleinrichtung 34 einen um eine Hebelachse H drehbar gelagerten Hebel 72, der einen ersten Hebelabschnitt 74 und einen zweiten Hebelabschnitt 76 aufweist, die jeweils gegenüber der Hebelachse H angeordnet sind. Die erste Koppelstange 36 ist mit dem ersten Hebelabschnitt 74 und dem ersten Tragarm 16 und die zweite Koppelstange 38 mit dem zweiten Hebelabschnitt 76 und dem zweiten Tragarm 18 verbunden. Zusätzlich umfasst die Vorrichtung 10₂ eine weitere erste Koppelstange 78 und eine weitere zweite Koppelstange 80, die mit dem weiteren ersten Tragarm 52 und dem ersten Hebelabschnitt 74 bzw. mit dem weiteren zweiten Tragarm 54 und dem zweiten Hebelabschnitt 76 verbunden sind.

Der Hebel 72 kann mit einer Feststelleinrichtung 82 in einer wählbaren Drehstellung festgestellt werden. Wie aus Figur 2c), die das in Figur 2a) gekennzeichnete Detail X vergrößert darstellt, sowie aus Figur 2d) hervorgeht, umfasst die Feststelleinrichtung 82 ein um die Hebelachse H gebogenes Feststellblech 83, welches an zwei Stützen 87 befestigt ist und eine Anzahl von Ausnehmungen 85 aufweist, in welche der Hebel 72 oder ein mit dem Hebel 72 zusammenwirkendes Griffstück 84 eingebracht werden können, wodurch die Drehstellung des Hebels 72 und somit die Stellung der Vorrichtung 10₂ festgelegt werden kann. Die Ausnehmungen 85 können zur besseren Zuordnung nummeriert sein. In Figur 2b) ist gezeigt, dass der erste Aufnahmeabschnitt 22 und der zweite Aufnahmeabschnitt 24 einen Abstand Da zueinander aufweisen, während der weitere erste Aufnahmeabschnitt 56 und der weitere zweite Aufnahmeabschnitt 58 einen weiteren Abstand Db zueinander aufweisen. Im dargestellten Ausführungsbeispiel unterscheiden sich der Abstand Da und der weitere Abstand Db. Die Tragstruktur 14 kann aber auch so ausgestaltet sein, dass der erste Abstand Da und der weitere erste Abstand Db unabhängig von der Stellung immer gleich bleiben.

Wie insbesondere aus der Figur 2a) ersichtlich, bilden der erste Tragarm 16 und der zweite Tragarm 18 ein hinteres Ende 86 der Tragstruktur 14. Die Aufnahmeabschnitte 22, 24 stehen somit nur zu einer Seite über die Tragarme 16, 18 über und weisen somit nur jeweils ein freies Ende 30 auf. Ein dem freien Ende 30 gegenüberliegendes inneres Ende 88 der Aufnahmeabschnitte 22, 24 schließt sich den Tragarmen 16, 18 an. Hierdurch sind die Aufnahmeabschnitte 22, 24 über die freien Enden 30 gut zugänglich, um das jeweilige Verkleidungsbauteil 12 auf die Aufnahmeabschnitte 22, 24 abzulegen.

Aus Figur 2b) ist erkennbar, dass die Tragstruktur 14 weiterhin einen Eingriffsabschnitt 90 umfasst. Der Eingriffsabschnitt 90 umfasst ein Grundprofil 92, welches auf der den Tragarmen 16, 18 gegenüberliegenden Seite des Tragprofils 20 beabstandet hiervon angeordnet ist. Wenn die Tragstruktur 14 auf den Boden abgestellt wird, weist daher das Tragprofil 20 einen entsprechenden Abstand zum Boden auf, so dass die Tragstruktur 14 gut beispielsweise mit einem Gabelstabler angehoben, transportiert und wieder abgelegt werden kann. Darüber hinaus kann das Grundprofil 92 auch zur Führung der Tragstruktur 14 auf einem Fließband oder auf einer Rollenbahn dienen.

### Bezugszeichenliste

- 10, 10₁, 10₂: Vorrichtung
- 12: Verkleidungsbauteil
- 14: Tragstruktur
- 16: erster Tragarm
- 18: zweiter Tragarm

- 20: Tragprofil
- 22: erster Aufnahmeabschnitt
- 24: zweiter Aufnahmeabschnitt
- 26: Schaumstoffauflage
- 28: Schaumstoffrolle

- 30: freies Ende
- 32: Anschlag
- 34: Verstelleinrichtung
- 36: erste Koppelstange
- 38: zweite Koppelstange

- 40: Zahnstangenabschnitt
- 42: Zahnrad
- 46: Seitenschenkel
- 48: Verbindungsschenkel

- 52: weiterer erster Tragarm
- 54: weiterer zweiter Tragarm
- 56: weiterer erster Aufnahmeabschnitt
- 58: weiterer zweiter Aufnahmeabschnitt

- 60: erste Drehlagerstange
- 62: zweite Drehlagerstange
- 64: erste Drehlagerhülse
- 66: zweite Drehlagerhülse
- 68: erste Versteifungsstrebe
- 69: weitere erste Versteifungsstrebe

- 70: zweite Versteifungsstrebe
- 71: weitere zweite Versteifungsstrebe
- 72: Hebel
- 74: erster Hebelabschnitt
- 76: zweiter Hebelabschnitt
- 78: weitere erste Koppelstange

- 80: weitere zweite Koppelstange
- 82: Feststelleinrichtung
- 83: Feststellblech
- 84: Griffstück
- 85: Ausnehmung
- 86: hinteres Ende
- 87: Stützen
- 88: inneres Ende

- 90: Eingriffsabschnitt
- 92: Grundprofil

- D, Da, D1, D2: Abstand
- Db: weiterer Abstand
- H: Hebelachse
- T: Drehachse
- X: Detail
- Y: Detail

## Patentansprüche

1. Vorrichtung zum Lagern und Transportieren von Verkleidungsbauteilen (12) von Fahrzeugen, insbesondere von Stoßfängern, umfassend
- einen ersten Aufnahmeabschnitt (22) und einen zweiten Aufnahmeabschnitt (24), auf welche das Verkleidungsbauteil zum Lagern und Transportieren auflegbar ist,
- eine Tragstruktur (14), an welcher der erste Aufnahmeabschnitt (22) und der zweite Aufnahmeabschnitt (24) in einem Abstand (D) zueinander befestigt sind, wobei die Tragstruktur (14) einen ersten Tragarm (16) und einen zweiten Tragarm (18) umfasst, wobei - der erste Aufnahmeabschnitt (22) am ersten Tragarm (16) und der zweite Aufnahmeabschnitt (24) am zweiten Tragarm (18) befestigt ist und
- eine mit der Tragstruktur (14) zusammenwirkende Verstelleinrichtung (34), mit welcher der Abstand (D) zwischen dem ersten Aufnahmeabschnitt (22) und dem zweiten Aufnahmeabschnitt (24) veränderbar ist wobei der erste Tragarm (16) und/oder der zweite Tragarm (18) mit der Verstelleinrichtung (34) bewegbar sind, um den Abstand (D) zwischen dem ersten Aufnahmeabschnitt (22) und dem zweiten Aufnahmeabschnitt (24) zu verändern
**dadurch gekennzeichnet, dass** die Verstelleinrichtung (34) einen um eine Hebelachse (H) drehbaren Hebel (72) mit einem ersten Hebelabschnitt (74) und eine erste Koppelstange (36) umfasst, wobei die erste Koppelstange (36) mit dem ersten Tragarm (16) und im ersten Hebelabschnitt (74) mit dem Hebel (72) verbunden ist.

2. Vorrichtung nach Anspruch 1, **dadurch gekennzeichnet, dass** der erste Tragarm (16) und/oder der zweite Tragarm (18) jeweils um eine Drehachse (T) drehbar an der Tragstruktur (14) gelagert sind und zum Verändern des Abstands (D) mittels der Verstelleinrichtung (34) um die Drehachse (T) gedreht werden.

3. Vorrichtung nach einem der Ansprüche 1 oder 2, **dadurch gekennzeichnet, dass** der Hebel (72) einen zweiten Hebelabschnitt (76) und eine zweite Koppelstange (38) umfasst, wobei die zweite Koppelstange (38) mit dem zweiten Tragarm (18) und im zweiten Hebelabschnitt (76) mit dem Hebel (72) verbunden ist.

4. Vorrichtung nach einem der vorherigen Ansprüche, **dadurch gekennzeichnet, dass** die Verstelleinrichtung (34) eine Feststelleinrichtung (82) umfasst, mit welcher der Abstand (D) zwischen dem ersten Aufnahmeabschnitt (22) und dem zweiten Aufnahmeabschnitt (24) festlegbar ist.

5. Vorrichtung nach einem der vorherigen Ansprüche, **dadurch gekennzeichnet, dass** die Verstelleinrichtung (34) ein Griffstück (84) zum Betätigen des Hebels (72) umfasst, wobei das Griffstück (84) und/oder der Hebel (72) zum Festlegen des Abstands (D) mit der Feststelleinrichtung (82) zusammenwirken.

6. Vorrichtung nach einem der vorherigen Ansprüche, **dadurch gekennzeichnet, dass** die Tragstruktur (14) einen Eingriffsabschnitt (90) zum Transportieren der Vorrichtung (10) mit einer Transporteinrichtung aufweist.

7. Vorrichtung nach einem der vorherigen Ansprüche, **dadurch gekennzeichnet, dass** der erste Aufnahmeabschnitt (22) und der zweite Aufnahmeabschnitt (24) elastische Schaumstoffauflagen (26) umfassen.

8. Vorrichtung nach Anspruch 7 **dadurch gekennzeichnet, dass** die Schaumstoffauflagen (26) im Wesentlichen zylinderförmige Schaumstoffrollen (28) umfassen, welche ein von den Tragarmen (16, 18) wegzeigendes freies Ende aufweisen.

9. Vorrichtung nach Anspruch 8, **dadurch gekennzeichnet, dass** die Schaumstoffrollen (28) drehbar an den Tragarmen (16, 18) montiert sind.

10. Vorrichtung nach einem der vorherigen Ansprüche, **dadurch gekennzeichnet, dass** der erste Aufnahmeabschnitt (22) und der zweite Aufnahmeabschnitt (24) jeweils einen Anschlag (32) aufweisen.

11. Vorrichtung nach einem der vorherigen Ansprüche, **dadurch gekennzeichnet, dass** die Tragstruktur (14) eine erste Drehlagerstange (60) und/oder eine zweite Drehlagerstange (62) aufweist, wobei eine erste Versteifungsstrebe (68) zwischen der ersten Drehlagerstange (60) und dem ersten Tragarm (16) und/oder eine zweite Versteifungsstrebe (70) zwischen der zweiten Drehlagerstange (62) und dem zweiten Tragarm (18) verlaufen.

12. Vorrichtung nach einem der vorherigen Ansprüche, **dadurch gekennzeichnet, dass** zumindest ein weiterer erster Aufnahmeabschnitt (56) und zumindest ein weiterer zweiter Aufnahmeabschnitt (58) an der Tragstruktur (14) in einem weiteren Abstand (Db) zueinander befestigt sind, wobei der weitere Abstand (Db) mit der Verstelleinrichtung (34) veränderbar ist.

## Claims

1. Device for storing and transporting cladding components (12) of vehicles, in particular bumpers, comprising
- a first receiving portion (22) and a second receiving portion (24) onto which the cladding component can be placed for storage and transport,
- a support structure (14) on which the first receiving portion (22) and the second receiving portion (24) are secured at a distance (D) from each other, wherein the support structure (14) comprises a first support arm (16) and a second support arm (18), wherein the first receiving portion (22) is secured on the first support arm (16) and the second receiving portion (24) is secured on the second support arm (18), and
- an adjustment device (34) which interacts with the support structure (14) and with which the distance (D) between the first receiving portion (22) and the second receiving portion (24) is modifiable, wherein the first support arm (16) and/or the second support arm (18) are movable with the adjustment device (34) in order to modify the distance (D) between the first receiving portion (22) and the second receiving portion (24),
**characterized in that** the adjustment device (34) comprises a lever (72), rotatable about a lever axis (H) and having a first lever portion (74), and a first coupling bar (36), wherein the first coupling bar (36) is connected to the first support arm (16) and is connected in the first lever portion (74) to the lever (72).

2. Device according to Claim 1, **characterized in that** the first support arm (16) and/or the second support arm (18) are each mounted rotatably on the support structure (14) about a rotation axis (T) and, in order to modify the distance (D), are rotated by means of the adjustment device (34) about the rotation axis (T).

3. Device according to either of Claims 1 and 2, **characterized in that** the lever (72) comprises a second lever portion (76) and a second coupling bar (38), wherein the second coupling bar (38) is connected to the second support arm (18) and is connected in the second lever portion (76) to the lever (72).

4. Device according to one of the preceding claims, **characterized in that** the adjustment device (34) comprises a fixing device (82), with which the distance (D) between the first receiving portion (22) and the second receiving portion (24) can be fixed.

5. Device according to one of the preceding claims, **characterized in that** the adjustment device (34) comprises a grip piece (84) for actuating the lever (72), wherein the grip piece (84) and/or the lever (72) interact with the fixing device (82) in order to fix the distance (D).

6. Device according to one of the preceding claims, **characterized in that** the support structure (14) has an engagement portion (90) for transporting the device (10) with a transport device.

7. Device according to one of the preceding claims, **characterized in that** the first receiving portion (22) and the second receiving portion (24) comprise elastic foam coverings (26).

8. Device according to Claim 7, **characterized in that** the foam coverings (26) comprise substantially cylindrical foam rolls (28) which have a free end pointing away from the support arms (16, 18).

9. Device according to Claim 8, **characterized in that** the foam rolls (28) are mounted rotatably on the support arms (16, 18).

10. Device according to one of the preceding claims, **characterized in that** the first receiving portion (22) and the second receiving portion (24) each have a stop (32).

11. Device according to one of the preceding claims, **characterized in that** the support structure (14) has a first rotary bearing bar (60) and/or a second rotary bearing bar (62), wherein a first stiffening strut (68) extends between the first rotary bearing bar (60) and the first support arm (16) and/or a second stiffening strut (70) extends between the second rotary bearing bar (62) and the second support arm (18).

12. Device according to one of the preceding claims, **characterized in that** at least one further first receiving portion (56) and at least one further second receiving portion (58) are secured on the support structure (14) at a further distance (Db) from each other, wherein the further distance (Db) is modifiable with the adjustment device (34).

## Revendications

1. Dispositif de stockage et de transport d'éléments de revêtement (12) de véhicules, en particulier de pare-chocs comprenant :
- un premier segment de réception (22) et un second segment de réception (24) sur lesquels l'élément de revêtement peut être déposé pour permettre son stockage et son transport,
- une structure porteuse (14) sur laquelle le premier segment de réception (22) et le second segment de réception (24) sont fixés à une distance (D) l'un de l'autre,
- la structure porteuse (14) comprenant un premier bras porteur (16) et un second bras porteur (18), le premier segment de réception (22) étant fixé sur le premier bras porteur (16) tandis que le second segment de réception (24) est fixé sur le second bras porteur (18), et
- un dispositif de réglage (34) coopérant avec la structure porteuse (14) et par l'intermédiaire duquel la distance (D) entre le premier segment de réception (22) et le second segment de réception (24) peut être modifiée,
le premier bras porteur (16) et/ou le second bras porteur (18) pouvant être déplacé(s) avec le dispositif de réglage (34) pour permettre de modifier la distance (D) entre le premier segment de réception (22) et le second segment de réception (24),
**caractérisé en ce que**
le dispositif de réglage (34) comporte un levier (72) mobile en rotation autour d'un axe de levier (H) et comprenant un premier segment de levier (74) et une première tige de couplage (36), la première tige de couplage (36) étant reliée au premier bras porteur (16) et étant reliée au levier (72) dans le premier segment de levier (74).

2. Dispositif conforme à la revendication 1,
**caractérisé en ce que**
le premier bras porteur (16) et/ou le second bras porteur (18) est(sont) respectivement monté(s) mobile(s) en rotation autour d'un axe de rotation (T) sur la structure porteuse (14) et est(sont) déplacé(s) en rotation autour de l'axe de rotation (T) pour modifier la distance (D) au moyen du dispositif de réglage (34).

3. Dispositif conforme à l'une des revendications 1 et 2,
**caractérisé en ce que**
le levier (72) comporte un second segment de levier (76) et une seconde tige de couplage (38), et la seconde tige de couplage (38) est reliée au levier (72) au second bras porteur (18) et est reliée dans le second segment de levier (76).

4. Dispositif conforme à l'une des revendications précédentes,
**caractérisé en ce que**
le dispositif de réglage (34) comporte un dispositif de fixation (82) permettant de fixer la distance (D) entre le premier segment de réception (22) et le second segment de réception (24).

5. Dispositif conforme à l'une des revendications précédentes,
**caractérisé en ce que**
le dispositif de réglage (34) comporte une pièce de préhension (84) pout permettre d'actionner le levier (72), la pièce de préhension (84) et/ou le levier (72) coopérant avec le dispositif de fixation (82) pour permettre de fixer la distance (D).

6. Dispositif conforme à l'une des revendications précédentes,
**caractérisé en ce que**
la structure porteuse (14) comporte un segment de mise en prise (90) pour permettre de transporter le dispositif (10) avec un dispositif de transport.

7. Dispositif conforme à l'une des revendications précédentes,
**caractérisé en ce que**
le premier segment de réception (22) et le second segment de réception (24) comportent des revêtements en mousse élastique (26).

8. Dispositif conforme à la revendication 7,
**caractérisé en ce que**
les supports en mousse (26) comportent des rouleaux en mousse (28) de forme essentiellement cylindrique qui ont une extrémité libre située à l'opposé des bras porteurs (16, 18).

9. Dispositif conforme à la revendication 8,
**caractérisé en ce que**
les rouleaux en mousse (28) sont montés mobiles en rotation sur les bras porteurs (16, 18).

10. Dispositif conforme à l'une des revendications précédentes,
**caractérisé en ce que**
le premier segment de réception (22) et le second segment de réception (24) comportent chacun une butée (32).

11. Dispositif conforme à l'une des revendications précédentes,
**caractérisé en ce que**
la structure porteuse (14) comporte une première tige de palier rotatif (60) et/ou une seconde tige de palier rotatif (62) et une première barre de renfort (68) s'étend entre la première tige de palier rotatif (60) et le premier bras porteur (16) et/ou une seconde barre de renfort (70) s'étend entre la seconde tige de palier rotatif (62) et le second bras porteur (18).

12. Dispositif conforme à l'une des revendications précédentes,
**caractérisé en ce qu'**
au moins un autre premier segment de réception (56) et au moins un autre second segment de réception (58) sont fixés sur la structure porteuse (14) à une autre distance (Db) l'un de l'autre, et l'autre distance (Db) pouvant être modifiée par l'intermédiaire du dispositif de réglage (34).
